# EUROPÄISCHE PATENTSCHRIFT

(11) **EP 3 701 280 B1**
(45) Veröffentlichungstag und Bekanntmachung des Hinweises auf die Patenterteilung: **17.11.2021**
(21) Anmeldenummer: 18769178.7
(22) Anmeldetag: 12.09.2018
(51) Int. Cl.: G01S 13/931, G01S 7/00, H01Q 25/00, H01Q 19/06

(54) **RADARSENSOR MIT MEHREREN HAUPTSTRAHLRICHTUNGEN**
RADAR SENSOR HAVING A PLURALITY OF MAIN BEAM DIRECTIONS
CAPTEUR RADAR COMPORTANT UNE PLURALITÉ DE DIRECTIONS DE RAYONNEMENT PRINCIPALES

(30) Priorität: 27.10.2017 DE 102017219372
(43) Veröffentlichungstag der Anmeldung: 02.09.2020
(73) Patentinhaber: Robert Bosch GmbH, 70442 Stuttgart (DE)
(72) Erfinder: MAYER, Marcel, 89173 Lonsee (DE); BAUR, Klaus, 88487 Mietingen (DE); LOESCH, Benedikt, 70195 Stuttgart (DE); POURMOUSAVI, Mehran, 70197 Stuttgart (DE)
(86) Internationale Anmeldenummer: PCT/EP2018/074661
(87) Internationale Veröffentlichungsnummer: WO 2019/081119

(56) Entgegenhaltungen:
- US-A- 5 977 904
- US-A1- 2002 067 314
- US-A1- 2009 267 822
- EVANS R J ET AL: "Consumer radar: Technology and limitations", 2013 INTERNATIONAL CONFERENCE ON RADAR, IEEE, 9. September 2013 (2013-09-09), Seiten 21-26, XP032519500, DOI: 10.1109/RADAR.2013.6651953 [gefunden am 2013-11-01]

## Beschreibung

Die vorliegende Erfindung betrifft einen Radarsensor mit mehreren Hauptstrahlrichtungen, entsprechend Anspruch 1. Ein ähnlicher Radarsensor ist aus der US2002/ 0067314 A1 bekannt.

### Stand der Technik

Aus der DE 199 61 774 A1 ist eine Vorrichtung zum Einstellen eines Richtstrahlsystems bekannt, die eine Basis mit mindestens einer Strahlquelle, mindestens drei Stützelementen, die der Fixierung der Basis an einem Träger dienen, aufweist, wobei zum Verändern des Abstandes der mindestens einen Strahlquelle von einem fokussierenden Mittel und der Ausrichtung der mindestens einen Strahlquelle im Verhältnis zu dem fokussierenden Mittel die mindestens drei Stützelemente selektiv und unabhängig voneinander in ihrer jeweiligen Länge veränderbar sind.

### Offenbarung der Erfindung

Der Kern der vorliegenden Erfindung ist es, einen Radarsensor zu realisieren, der Antennenelemente auf einer ebenen Leiterplatte aufweist und mittels dielektrischer Linsen ein oder mehrere Hauptstrahlrichtungen, die von der Leiterplattennormalen abweichende Richtungen haben, erzeugt, so dass ein derartiger, in einem Kraftfahrzeug eingebauter Sensor, in mehrere Richtungen das Umfeld überwachen kann.

Erfindungsgemäß wird dieses durch die Merkmale des unabhängigen Anspruchs 1 gelöst. Vorteilhafte Weiterbildungen und Ausgestaltungen ergeben sich aus den Unteransprüchen.

Vorteilhafterweise sind die ein oder mehreren Antennenelemente, die auf der Leiterplatte vorgesehen sind, als planare Antennen, insbesondere als Patch-Antennen ausgeführt. Vorteilhafter Weise lassen sich planare Antennen, insbesondere Patch-Antennen, sehr preisgünstig und in einer sehr flachen Bauweise platzsparend realisieren.

Unter der Hauptstrahlrichtung des Radarsensors ist die Richtung der größten Strahlbündelung außerhalb des Radarsensors gemeint. Die Hauptstrahlrichtung des Antennenelementes ist, insbesondere bei der Realisierung des Antennenelementes als Patch-Antenne, in Normalenrichtung zur Leiterplattenoberfläche orientiert. In diesem Fall ist die Hauptstrahlrichtung des einen oder mehreren Antennenelementes senkrecht zur Leiterplattenoberfläche ausgeprägt und damit identisch orientiert wir die Richtung der Antennennormalen. Diese Hauptstrahlrichtung des einen oder der mehreren Antennenelemente ist im Weiteren nicht mit der Hauptstrahlrichtung des Radarsensors zu verwechseln.

Der Kippwinkel gemäß der unabhängigen Ansprüche ist nicht zu verwechseln mit dem Kippwinkel der Hauptstrahlrichtung in einem System ohne dielektrische Linse. Der Kippwinkel ist der Winkel, um den die optische Achse der dielektrischen Linse gegenüber der Normalen zur Leiterplatte bzw. der Antennennormalen verkippt ist. Die Verkippung der Hauptstrahlrichtung des Radarsensors ist von diesem Kippwinkel abhängig, jedoch nicht mit diesem identisch.

Vorteilhafter Weise ist vorgesehen, dass der vorbestimmte Winkel der mindestens einen Hauptstrahlrichtung des Radarsensors durch den Kippwinkel der optischen Achse der mindestens einen dielektrischen Linse zur mindestens einen Antennennormalen vorgegeben wird.

Weiterhin ist es vorteilhaft, dass der vorbestimmte Winkel der mindestens einen Hauptstrahlrichtung des Radarsensors durch den Abstand des mindestens einen Antennenelements zur Lotsenkrechten der Leiterplatte, die durch das Linsenzentrum verläuft, vorgegeben wird. Das Linsenzentrum ist hierbei der Punkt, an dem die optische Achse der Linse den Mittelpunkt der dielektrischen Linse kreuzt. Projiziert man durch dieses Linsenzentrum eine Gerade, die senkrecht auf der Leiterplatte steht und ermittelt man den lateralen Abstand auf der Leiterplattenoberfläche zu dem Punkt, in dem die optische Achse der dielektrischen Linse die Leiterplatte schneidet, so erhält man den Abstand a.

Weiterhin ist es vorteilhaft, dass als dielektrischen Linsen zwei Linsen vorgesehen sind, deren optische Achsen in lateraler Richtung zu der einen oder den mehreren Antennennormalen in entgegengesetzte Richtungen verkippt sind und damit die sich ergebenden Hauptstrahlrichtungen des Radarsensors in lateraler Richtung zu der einen oder den mehreren Antennennormalen in unterschiedliche Raumrichtungen ausgerichtet sind. Als laterale Richtungen zu der einen oder den mehreren Antennennormalen sind damit die Richtungen definiert, die parallel zur Leiterplattenoberfläche orientiert sind. Durch diese vorteilhafte Weiterbildung ist vorgesehen, dass die Hauptstrahlrichtungen des Radarsensors in lateral entgegengesetzte Richtungen ausgerichtet sind, wobei diese laterale Ausrichtung die parallele Ausrichtung zur Leiterplattenoberfläche definiert.

Weiterhin ist es vorteilhaft, dass die mindestens eine oder mehreren Linsen als eine oder mehrere Zylinderlinsen ausgeführt sind. Durch die Ausführung der dielektrischen Linsen als Zylinderlinsen kann man Hauptstrahlrichtungen des Sensors gestalten, die nicht nur keulenförmig ausgestaltet sind, sondern ähnlich einer schwenkbaren Ebene im Raum gestaltet sein können. Hierzu sind die axialen Längsachsen der einen oder mehreren Zylinderlinsen senkrecht zur Hauptstrahlrichtung des mindestens einen oder der mehreren Antennenelementen auszurichten, so dass die Längsachsen der Zylinderlinsen parallel zur Leiterplattenoberfläche des Radarsensors ausgerichtet sind.

Weiterhin ist es vorteilhaft, dass als Linsen zwei Zylinderlinsen vorgesehen sind, und diese so angeordnet sind, dass deren axialen Längsachsen zueinander parallel ausgerichtet sind. Durch diese Ausgestaltung ist es möglich, einen Radarsensor zu gestalten, der, ausgehend von der Antennennormalen zwei Keulen oder zwei Hauptstrahlebenen aufweist, die, ausgehend von der Antennennormalen, in entgegengesetzte Richtungen verkippt sind.

Weiterhin ist es vorteilhaft, dass die mindestens ein oder mehreren Antennenelemente zum Senden und/oder zum Empfangen als seriell gespeiste Array-Antennen ausgeführt sind. Besonders vorteilhaft ist in diesem Fall eine Speiseleitung des seriell gespeisten Antennen-Arrays vorgesehen, die parallel zur axialen Längsachse der mindestens einen Zylinderlinse bzw. der beiden Zylinderlinsen auf der Leiterplattenoberfläche angeordnet ist.

Weiterhin ist es vorteilhaft, dass der Radarsensor zwischen dem mindestens einen Antennenelement und der mindestens einen dielektrischen Linse oder Teillinse einen Reflektor aufweist. Dieser Reflektor kann insbesondere zwischen der Leiterplatte und dem Randabschnitt der dielektrischen Linse angeordnet sein, die von der Leiterplatte am weitesten entfernt ist. Hiermit ist es möglich, die Anteile der Sende- und Empfangsstrahlen, die aufgrund der verkippten Linsenorientierung nicht mehr durch die Linse fokussiert werden können, durch eine Reflexion am Reflektor dennoch nutzbar zu machen. Weiterhin kann eine Störung der Hauptstrahlrichtung der benachbarten dielektrischen Linse vermieden werden. Dabei ist der Reflektor so auszurichten, dass der Normalenvektor der Reflektorfläche in lateraler Richtung zur Hauptstrahlrichtung des einen oder der mehreren Antennenelemente entgegengesetzt zur lateralen Richtung der Hauptstrahlrichtung des Radarsensors orientiert ist. Idealerweise werden reflektierte Teilstrahlen so reflektiert, dass die reflektierten Teilstrahlen nach Brechung durch die dielektrische Linse parallel zur Hauptstrahlrichtung des Radarsensors verlaufen.

In vorteilhafter Weise weist der Reflektor eine metallische Oberfläche auf oder ist aus Metall gefertigt.

Weiterhin vorteilhaft ist es, dass die ein oder mehreren dielektrischen Linsen als Fresnel-Linsen ausgeführt sind.

Erfindungsgemäß ist vorgesehen, dass der Radarsensor zwei oder mehrere Sendeantennen gemäß der beschriebenen Erfindung aufweist und eine oder mehrere bistatische Empfangsantennen vorgesehen sind, die so auf der Leiterplatte angeordnet sind, dass diese Empfangsantennen keine dielektrische Linse in ihrem Strahlengang aufweisen. Bei der Realisierung des erfindungsgemäßen Verfahrens in der Form eines bistatischen Sensors, also eines Radarsensors bei dem zum Senden der Radarstrahlung und zum Empfangen der Radarstrahlung unterschiedliche Antennen verwendet werden, kann es vorteilhaft sein, dass lediglich die Sendeantennen die erfindungsgemäße Ausführung aufweisen und die Empfangsantennen außerhalb der Fokussierung der dielektrischen Linsen angeordnet sind und damit unfokussierte Empfangsstrahlung erfassen. Hierdurch ist es möglich, dass das System als MIMO(Multiple-In-Multiple-Out)-System, wodurch die virtuelle Apertur der Antenne vergrößert wird und damit eine verbesserte Auflösung des Sensors erreicht wird.

Weiterhin vorteilhaft ist es, dass mehrere der Empfangsantennen entlang einer Linie angeordnet sind. Besonders vorteilhaft ist die Linie so ausgerichtet, dass diese in Azimutrichtung des Radarsensors ausgerichtet ist. Damit ist es möglich, mittels der Empfangsantennen eine Winkelauflösung der Empfangssignale in Azimutrichtung des Radarsensors zu erreichen und damit die Empfangsrichtung der detektierten Objekte mit hoher Genauigkeit zu ermitteln. Durch die Anordnung der Empfangsantennen entlang einer Linie zur Messung des Azimutwinkels werden die Laufzeitunterschiede der Empfangssignale an den einzelnen Empfangsantennen ausgewertet und durch den Phasenunterschied der Signale ein Azimutwinkel der einfallenden Empfangswellen bestimmt.

Bei dem beschrieben Linsenkonzept ist der Schwenkwinkel weitgehend unabhängig von der Frequenz und von Leiterplattentoleranzen, da die Schwenkrichtung primär durch die geometrische Anordnung und den Kippwinkel des Linsensystems erreicht wird.

Damit wird eine deutlich größere nutzbare Bandbreite der Antenne möglich im Vergleich zu konventionellen Systemen, da die Bandbreite nicht mehr für die durch Serienstreuung entstehenden Fertigungstoleranzen vorgehalten werden muss, sondern real in der Modulation genutzt werden kann. Zudem können deutlich einfachere Patchelemente als Antennenelemente verwendet werden, die im Vergleich zu großflächigen planaren Arraystrukturen bereits vom prinzipiellen Design größere Bandbreiten ermöglichen.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Kurze Beschreibung der Zeichnungen

Nachfolgend werden Ausführungsbeispiele der Erfindung anhand von Zeichnungen erläutert. Es zeigen
- Figur 1: eine schematische Schnittdarstellung eines beispielhaften Radarsensors in Querrichtung,
- Figur 2: eine schematische Skizze der Funktionsweise des beispielhaften Sensors,
- Figur 3: eine schematische Schnittdarstellung in Querrichtung der Ausführungsform bei Verwendung von Zylinderlinsen,
- Figur 4: eine schematische Schnittdarstellung in Querrichtung bei Verwendung eines Reflektors,
- Figur 5: eine schematische Darstellung der Anordnung der Elemente auf der Leiterplatte bei Ausführung der Erfindung in einem beispielhaften MIMO-System und
- Figur 6: eine weitere schematische Darstellung der Anordnung der Elemente auf der Leiterplatte bei Ausführung der Erfindung im Rahmen eines weiteren beispielhaften MIMO-Systems.

### Ausführungsformen der Erfindung

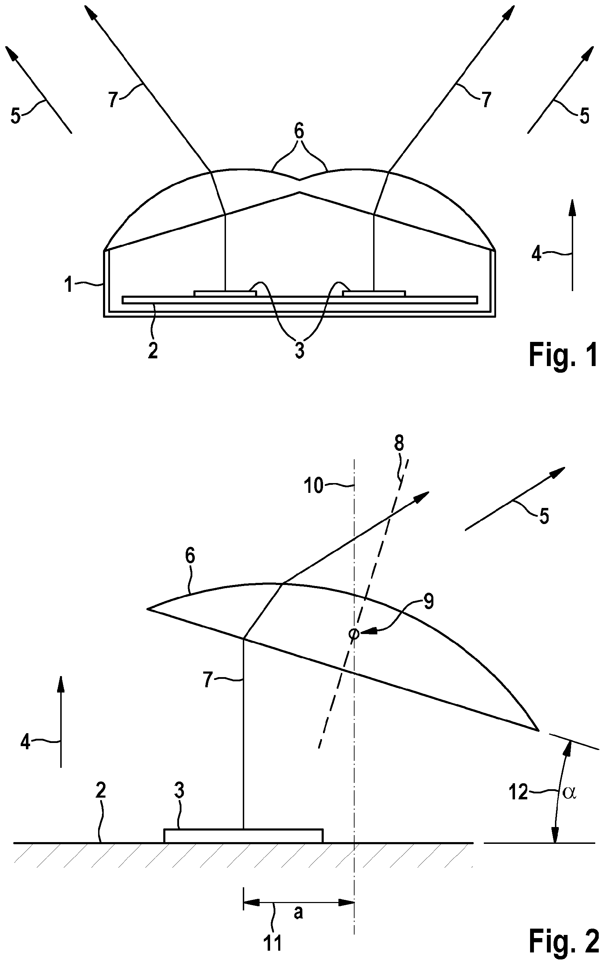

In Figur 1 ist eine schematische Querschnittsdarstellung eines beispielhaften Radarsensors dargestellt. Zu erkennen ist ein schalenförmiges Gehäuse 1 des Radarsensors, das einen Boden und seitliche Wände aufweist. Dieses schalenförmige Gehäuse 1 ist nach oben hin offen und wird nach oben durch die dielektrische Linse 6 bzw. die dielektrischen Linsen 6 begrenzt. Im Gehäuse 1 des Radarsensors ist eine Leiterplatte 2 angeordnet. Die Leiterplatte 2 beinhaltet neben elektrischen Komponenten für die Signalverarbeitung, die Spannungsversorgung sowie die Kommunikation mit anderen elektrischen Einrichtungen die Antennen 3 des Radarsensors. Die als mindestens eine oder mehrere Antennenelemente 3 ausgeführten Antennen, die insbesondere Antennen zum Senden sein können, sind dabei als planare Antennen ausgeführt. Planare Antennen sind meist als Metallschicht auf der Oberfläche der Leiterplatte 2 ausgeführt. Dadurch ergibt sich eine Hauptstrahlrichtung des Antennenelements 3 in Richtung der Antennennormalen 4, die sich in senkrechter Richtung zur Oberfläche der Leiterplatte 2, auf der das mindestens eine Antennenelement 3 aufgebracht ist, als die Richtung der stärksten Abstrahlung der elektromagnetischen Wellen ergibt. Bei der Ausführung eines Sensors mit mehreren Antennenelementen 3 sind diese direkten Abstrahlrichtungen der Antennenelemente 3 vor dem Passieren der dielektrischen Linse 6 bzw. den dielektrischen Linsen 6 noch parallel zueinander und parallel zur Antennennormalen 4 ausgerichtet. Da mehrere Antennenelemente 3 sowie mehrere dielektrische Linsen 6 verwendet werden können ist es möglich, dass die anfangs parallel ausgerichteten Abstrahlrichtungen durch die unterschiedlich orientierten dielektrischen Linsen 6 bzw. die unterschiedlich orientierten Teile der dielektrischen Linse 6 in unterschiedliche Richtungen gebrochen werden. So kann durch ein Verkippen der dielektrischen Linsen 6 bzw. der Teilbereiche 6 der dielektrischen Linse erreicht werden, dass die Sendestrahlen 7 nach Passieren der dielektrischen Linse 6 bzw. der Teilbereiche 6 der dielektrischen Linse in unterschiedliche Richtungen 7 orientiert sind, die die Hauptstrahlrichtungen 5 des Radarsensors darstellen. Dabei werden die Hauptstrahlrichtungen 5 des Radarsensors durch das Verkippen der dielektrischen Linse 6 beeinflusst, wobei sich bei einem Verkippen der dielektrischen Linsen 6 bzw. der Teilbereiche 6 der dielektrischen Linse in entgegengesetzte Richtungen, bezogen auf die Antennennormale 4, Hauptstrahlrichtungen 5 ergeben, die ebenfalls in entgegengesetzte Raumrichtungen verkippt sind. Hierdurch lässt sich beispielsweise ein Radarsensor realisieren, der seitlich an einem Kraftfahrzeug befestigt werden kann und den Seitenbereich des Fahrzeugs sowohl in Fahrtrichtung, als auch entgegengesetzt zur Fahrtrichtung erfassen kann. Weiterhin kann es besonders vorteilhaft sein, einen derartigen Sensor in einer Ecke des Fahrzeugs einzusetzen, dass sowohl der Bereich seitlich des Fahrzeugs, als auch hinter dem Fahrzeug oder die Bereiche seitlich des Fahrzeugs und vor dem Fahrzeug gleichzeitig überwacht werden können. Hierdurch kann durch einen einzigen Sensor ein besonders großer Erfassungsbereich realisiert werden, jedoch dabei auch eine besonders hohe Auflösung der Empfangssignale erreicht werden.

In Figur 2 ist das Prinzip der Figur 1 nochmals detaillierter dargestellt. Aus Gründen der Vereinfachung wurde das Gehäuse 1 des Radarsensors nicht dargestellt. Zu erkennen ist die Leiterplatte 2, auf deren Oberfläche ein Antennenelement 3 aufgebracht ist und beispielsweise als planare Antenne, insbesondere als Patchantenne ausgeführt sein kann. Dieses Antennenelement 3 strahlt unfokussiert in Richtung der Antennennormalen 4 eine elektromagnetische Welle als Sendesignal ab. Dieser Strahlengang 7 der Radarstrahlung trifft im weiteren Verlauf auf die dielektrische Linse 6, durch die der Strahlengang 7 mehrfach gebrochen wird. Die dielektrische Linse 6 weist eine optische Achse 8 auf, die die Linsenachse definiert. Im Bereich der optischen Achse 8 befindet sich im Schnittbereich mit der Linse 6 das Linsenzentrum 9. Die Verkippung der Hauptstrahlrichtung 5 des Radarsensors in Bezug auf die Antennennormale 4 ergibt sich maßgeblich durch den Abstand 11, der im weiteren auch als a bezeichnet wird sowie durch den Kippwinkel 12, um den die optische Achse 8 der dielektrischen Linse 6 verkippt ist und im Weiteren als alpha bezeichnet wird. Zur Vereinfachung der Figur 2 ist eine Senkrechte 10 eingezeichnet, die senkrecht auf der Leiterplattenoberfläche, also in Richtung der Antennennormalen 4 orientiert ist und durch das optische Zentrum 9 der dielektrischen Linse definiert wird. Diese Senkrechte 10 schneidet die Leiterplattenoberfläche der Leiterplatte 2 in einem Punkt, der vom Zentrum des Antennenelements 3 im Abstand a entfernt ist. Dieser Abstand a 11 sowie der Kippwinkel alpha 12, um den die optische Achse der dielektrischen Linse bezüglich der Antennennormalen 4 bzw. der Senkrechten 10 verkippt ist, beeinflussen hierbei maßgeblich den Winkel der Hauptstrahlrichtung 5 des Radarsensors. Bei der Ausführung des Radarsensors mit mehr als einer Sendeantenne ist es auch möglich, unterschiedliche Abstände a 11 und/oder unterschiedliche Kippwinkel alpha 12 für die einzelnen Antennenelemente 3 und/oder die einzelnen dielektrischen Linsen 6 bzw. Teilbereiche 6 der dielektrischen Linse vorzusehen und damit die Hauptstrahlrichtungen 5 des Radarsensors entsprechend den notwendigen Gegebenheiten anzupassen.

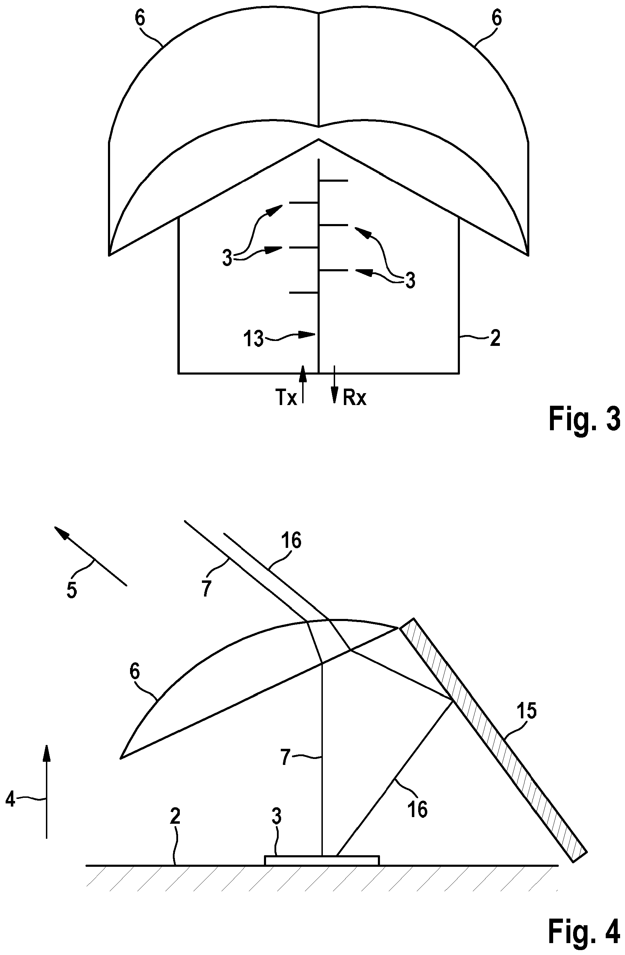

In Figur 3 ist der beispielhafte Sensor in einer besonders vorteilhaften Ausgestaltung dargestellt. Zu erkennen ist wiederum die Leiterplatte 2, die in perspektivischer Darstellung dargestellt ist. Auf dieser Leiterplatte 2 ist eine Speiseleitung 13 dargestellt, die die Anschlussleitung zur Antennenstruktur 3 bildet. Über diese Anschlussleitung 13 werden der Antennenstruktur 3 Sendesignale Tx zugeführt und gegebenenfalls Empfangssignale Rx von der Empfangsantenne an die Auswerteeinrichtungen weitergeleitet. Die Antennenelemente können beispielsweise als seriengespeiste Patchantennen ausgeführt sein. Parallel zur Ausrichtung der Anschlussleitung 13 sind zwei Zylinderlinsen 6 vorgesehen, die gegeneinander und bezüglich der Antennennormalen 4 verkippt sind. Durch diese Ausführungsform entstehen zwei Antennenspalten, jeweils bestehend aus Antennenelementen 3, nämlich einmal linksseits der Speiseleitung 13 und zum anderen rechtsseits der Speiseleitung 13. Diese zwei Antennenreihen sind den beiden Zylinderlinsen 6 zugeordnet, die damit zwei Hauptstrahlrichtungen 5 des Radarsensors gemäß der zu Figur 1 ausgeführten Funktionsweise, ausprägen. Durch diese Ausführungsform der Figur 3 ist es möglich, mittels einer einzigen Antennenzuleitung zwei Hauptstrahlrichtungen 5 auszuprägen, die unterschiedliche Raumrichtungen erfassen. Bei Verwendung von Zylinderlinsen und einem Serienarray ist es möglich, zwei Sende- und Empfangsebenen auszuprägen, so dass der Radarsensor mit einem großen Erfassungsbereich ausgestattet ist.

Die Linsen gemäß dieser Ausführungsform weisen relativ geringe Aperturbreiten auf um eine breitere Strahlcharakteristik im Bereich der Hauptstrahlrichtungen zu erhalten. Die Höhe des Antennensystems bleibt durch die geringe Fokussierung zudem trotz Linsensystem relativ gering, zum Beispiel nur einige Millimeter. Eine weitere Reduzierung der Höhe ist durch Verwendung von Linsenelementen mit geringeren Fokusabständen oder Linsen in Fresnel-Bauweise möglich. Somit sind trotz Linsensystem flache Sensoren realisierbar.

In Figur 4 ist ein ähnliches Beispiel wie zu Figur 2 beschrieben, dargestellt, die jedoch durch den Reflektor 15 ergänzt wurde. In Figur 4 wurde wiederum auf die Darstellung des Gehäuses 1 verzichtet. Es ist die Leiterplatte 2 zu erkennen, auf deren Oberfläche das mindestens eine oder die mehreren Antennenelemente 3 aufgebracht sind. Diese Antennenelemente 3 senden in Richtung der Antennennormalen 4 Sendestrahlung aus und weisen dabei die höchste Energiedichte in Richtung des Strahlengangs 7 auf. Diese Hauptstrahlrichtung 7 wird durch die dielektrische Linse 6, deren optische Achse 8 gegenüber der Antennennormalen 4 um den Kippwinkel 12 (alpha) verkippt ist, gebrochen, so dass sich eine Hauptstrahlrichtung 5 des Radarsensors, ergibt. Durch das Verkippen der dielektrischen Linse 6 ist es möglich, dass parasitäre Strahlung gemäß dem Strahlengang 16 unfokussiert abgestrahlt wird, die zum einen für die Detektion in Richtung der Hauptstrahlrichtung 5 verloren geht, zum anderen einen benachbarten Strahlengang der benachbarten dielektrischen Linse oder dielektrischen Teillinse stören kann. Um dies zu vermeiden und den Sensor weiter zu verbessern kann ein Reflektor 15 vorgesehen verwendet werden, der insbesondere als metallischer Reflektor ausgeführt sein kann. Dieser ist dabei so orientiert, dass dieser zwischen dem Randbereich der dielektrischen Linse 6, der von der Leiterplattenoberfläche 2 an weitesten beabstandet ist, und dem Bereich der Leiterplattenoberfläche 2, der in lateraler Richtung zur Antennennormalen 4 entgegen der Hauptstrahlrichtung 5 orientiert ist, aufgespannt ist. Hierdurch ergibt sich, dass die abgesandte Sendeleistung, die in Richtung des Strahlengangs 16 abgestrahlt wird, am Reflektor 15 reflektiert wird

und die dielektrische Linse 6 in Richtung der Hauptstrahlrichtung 5 des Radarsensors abgestrahlt wird. Dabei kann es möglich sein, den Reflektor 15 so zu orientieren, dass die Ausbreitungsrichtung des Großteile der reflektierten und gebrochenen Sendeleistung entlang des Strahlengangs 16 außerhalb des Radarsensors in gleicher Richtung geschieht, wie der Strahlengang 7, der entlang der Antennennormalen 4 abgestrahlt wurde. Alternativ hierzu ist es auch möglich, eine Antenne mit einem ausgeprägten Nebenmaximum in Richtung des Strahlengangs 16 abzustrahlen, so dass die Hauptstrahlrichtung 7 und der Strahlengang 16 außerhalb des Radarsensors unterschiedliche Raumrichtungen erfassen und damit durch das Hauptmaximum und das Nebenmaximum unterschiedliche Überwachungsbereiche ausgeleuchtet werden können.

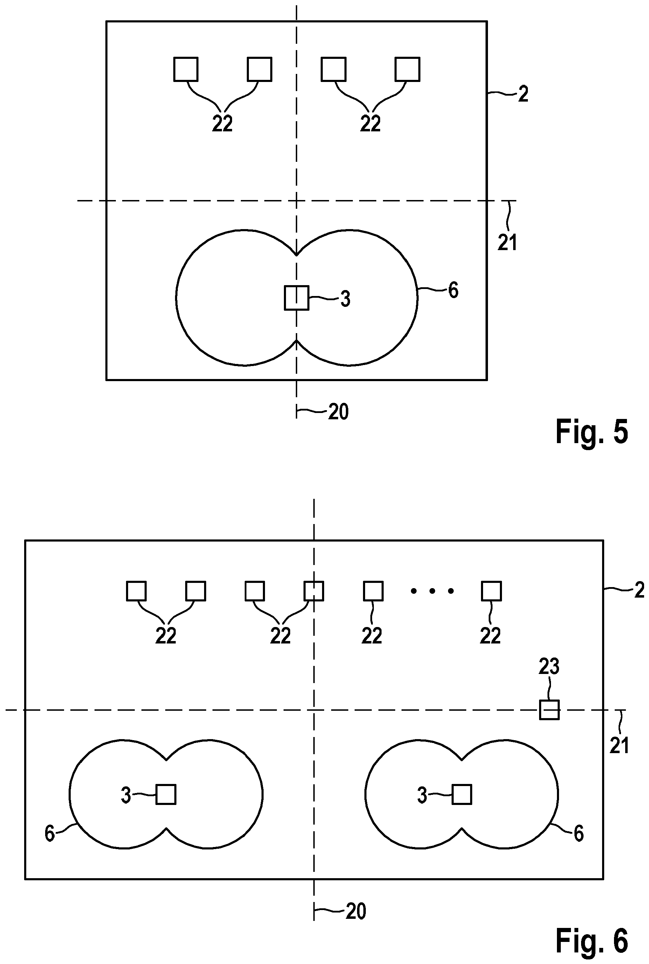

In Figur 5 ist eine Ausführungsform des Sensors als MIMO(Multiple-In-Multiple-Out)-Radarsystem mit einem Sendekanal dargestellt. Es ist hierzu die Leiterplatte 2 in Draufsicht dargestellt, die durch eine vertikale Symmetrieachse 20 sowie einer horizontaler Symmetrieachse 21 aufgeteilt wird. Entlang einer horizontalen Linie, die parallel zur horizontalen Symmetrieachse 21 verläuft, sind die Empfangsantennen 22, vorteilhafter Weise in äquidistanten Abständen positioniert. Durch diese Anordnung der Empfangsantennen 22 können die an Objekten reflektierten Teilstrahlen hinsichtlich ihres Azimutwinkels ausgewertet werden und somit der Azimutwinkel des detektierten Objekts besonders genau ermittelt werden. Im unteren Teil der Leiterplatte 2 ist der Sendebereich mit einer doppelten Linsenstruktur dargestellt. Diese doppelte Linsenstruktur verfügt über die beschriebene Sendeantennenanordnung mit gekipptem Linsensystem und einer gespeisten Sendeantenne 3. Sendeantenne 3 und Empfangsantenne 22 sind dabei beispielsweise in planarer Technik ausgeführt. Die doppelte Linsenstruktur 6 sorgt dabei dafür, dass die Sendeantenne 3 zwei Hauptstrahlrichtungen 5 aufweist, die aus der Zeichenebene heraus zeigen und dabei zusätzlich sowohl nach links als auch nach rechts, bezüglich der vertikalen Symmetrieachse 20, orientiert sind. Damit kann man mittels nur einem Sendekanal zwei Hauptstrahlrichtungen ausprägen, so dass ein kompakter und günstiger Sensoraufbau ermöglicht wird. Die dielelektrischen Linsen 6, die als doppelte Linsenstruktur ausgeführt sind, können dabei, ähnlich wie in Figur 3 dargestellt, als doppelte Zylinderlinsen 6 ausgeführt sein.

In Figur 6 ist eine weitere Ausführungsform mit zwei oder mehr Sendeantennen 3 und identischen Abstrahlcharakteristiken dargestellt. Beim Einsatz dieses leistungsfähigeren MIMO-Systems sind zwei oder mehr Sendeantennen mit möglichst identischen Abstrahlcharakteristiken erforderlich.

Es ist wiederum die Leiterplatte 2 in Draufsicht dargestellt. Die Antennennormale 4 ist dabei wiederum wie in Figur 5, senkrecht zur Zeichenebene orientiert. Die Oberfläche der Leiterplatte 2 wird wiederum durch eine vertikale Symmetrieachse 20 sowie eine horizontale Symmetrieachse 21 gegliedert. Im oberen Teil der Leiterplatte 2, also oberhalb der horizontalen Symmetrieachse 21 sind wiederum Empfangsantennen 22 dargestellt, die entlang einer horizontalen Linie, vorteilhaft jedoch nicht zwingend in äquidistanten Abständen, positioniert sind und somit Empfangssignale hinsichtlich ihres Azimutwinkels besonders genau auswerten können. Die Anzahl dieser Empfangsantennen 22 kann dabei, je nach Leistungsfähigkeit des Empfangssystems, unterschiedlich viele Einzelpatches umfassen. In der unteren Hälfte der Figur 6 sind zwei identische Sendeantennen dargestellt. Ein Sendeantennenaufbau linksseits der vertikalen Symmetrieachse 20 und der andere Sendeantennenaufbau rechts neben der vertikalen Symmetrieachse 20. Jede dieser Sendeantennen besteht aus einer Sendeantenne 3, die beispielsweise als Patchantenne ausgeführt sein kann, sowie einer doppelten Linsenstruktur 6, die aus dem Sendesignal jeder Sendeantennenaufbauten 3 zwei Hauptstrahlrichtungen 5 des Radarsensors erzeugen. Insgesamt werden durch die in Figur 6 dargestellte Struktur vier Hauptstrahlrichtungen erzeugt. In Abwandlung der Struktur gemäß Figur 6 ist es möglich, die doppelten dielektrischen Linsen 6 jeweils als doppelte Zylinderlinsen auszuführen, ähnlich wie in Figur 3 beschrieben. In diesem Fall sind die Sendeantennen 3 jeweils als seriengespeiste Arrayantenne auszuführen, sodass auch in diesem Fall vier Sendeebenen erzeugt werden.

Optional ist es möglich, eine zusätzlich gespeiste Antenne 23 außerhalb der dielektrischen Linsenstruktur vorzusehen, die eine breite Hauptstrahlcharakteristik in Azimutrichtung, also bezüglich der dargestellten Figur in horizontaler Richtung aufweist. Dadurch ist es möglich, gezielt weitere Winkeleinrichtungen auszuleuchten und Sensoren mit Erfassungsbereichen herzustellen, die gezielt ohne großen Aufwand auf Kundenwünsche angepasst werden können.

Die dargestellten Radarsensoraufbauten können hierbei um ein nicht fokussierendes Radom ergänzt werden, beispielsweise eine Kunststoffabdeckung, hinter der der Radarsensor in einem Kraftfahrzeug verbaut wird, so dass der Sensor selbst für den Betrachter von außen nicht sichtbar ist. Die Wölbungen der Linsen können bei allen beschriebenen Konzepten auch zur Innenseite hin zeigen. Fokussierende und strahlschwenkende Funktionen der Linsen bleiben dadurch unverändert erhalten und werden nicht beeinflusst. Weitere Linsenformen sind ebenfalls möglich, beispielsweise gestufte Fesnel-Linsen, wodurch die Menge an Kunststoffmaterial für die Linse reduziert werden kann und somit die Sensoreinrichtung kosten- und gewichtsoptimiert hergestellt werden kann.

Ein weiterer Vorteil ist die einfache Anpassung der Strahlrichtung und Strahlbreite an verschiedene Anforderungen und kundenspezifische Einbausituationen. Eine aufwändige Neuentwicklung des Feednetzwerkes zur Antennenspeisung auf der Leiterplatte für unterschiedliche Varianten, wie bei planaren Konzepten, ist bei diesem Ansatz nicht erforderlich. Ein Austausch des Radomes mit unterschiedlichen Linsengeometrien reicht hierfür aus. Die Variantenvielfalt bei der Leiterplatte wird dadurch auf ein Minimum begrenzt. Weiterhin sind die Komplexität im Design und der Optimierungsaufwand durch die bekannten optischen Zusammenhänge bei Linsensystemen im Vergleich zu komplexen Verteilnetzwerken bei phasengesteuerten Arraystrukturen deutlich verringert. Die Auslegung der Hauptstrahlrichtung kann ohne Optimierung über Feldsimulation bereits mit einfachen strahlenoptischen Brechungsgesetzen erfolgen. Kundenspezifische Systemanforderungen bezüglich Detektionsbereich und Einbausituation im Fahrzeug sind somit einfach und schnell anpassbar. Gezielt können zudem funktionsbedingt enge Winkelbereiche fokussiert werden, in denen hohe Reichweiten benötigt werden.

Im Gegensatz zu Linsen für hochfokussierende Fernbereichsradarsensoren sind bei seitlichen Radarsensoren üblicherweise bereits geringere Fokussierungen ausreichend um die mittleren Reichweitenanforderungen erfüllen zu können. Daher reicht die Verwendung von kompakten Linsenelementen mit geringer Apertur und Brennweite aus um trotz Einsatz eines Linsensystems sehr flache Sensoren realisieren zu können.

Es können dabei beliebige Geometrien wie beispielsweise rotationssymmetrische, zylinderförmige oder elliptische Linsen verwendet werden. Weiterhin können beliebige Antennen zur Speisung der Linse verwendet werden. Beispielhaft können dies Einzelpatche oder Patcharrays sein.

## Patentansprüche

1. Radarsensor mit mehreren Hauptstrahlrichtungen (5), aufweisend eine Leiterplatte (2), auf der zwei oder mehr Antennenelemente (3) zum Serrden oder zum Senden und Empfangen der Radarstrahlung vorgesehen sind und eine oder mehrere bistatische Empfangsantennen (22) zum Empfangen der Radarstrahlung angeordnet sind sowie mindestens eine oder mehrere dielektrische Linsen (6), die im Strahlengang (7) eines oder mehrerer der Antennenelemente (3) angeordnet sind,
wobei
die optische Achse (8) der dielektrischen Linse (6) gegenüber der mindestens einen oder der mehreren Antennennormalen (4) in einem Winkel (12) größer Null Grad verkippt ist so dass mindestens eine Hauptstrahlrichtung (5) des Radarsensors mit einem vorbestimmten Winkel zur Senkrechten (10) der Leiterplattenoberfläche festgelegt ist,
**dadurch gekennzeichnet, dass** eine oder mehrere der bistatischen Empfangsantennen (22) so auf der Leiterplatte angeordnet sind, dass diese Empfangsantennen (22) keine dieelektrische Linse in ihrem Strahlengang aufweisen.

2. Radarsensor nach Anspruch 1, **dadurch gekennzeichnet, dass** der vorbestimmte Winkel der mindestens einen Hauptstrahlrichtung (5) des Radarsensors durch den Kippwinkel (12) der optischen Achse (8) der mindestens einen dielektrischen Linse (6) zur mindestens einen Antennennormalen (4) vorgegeben wird.

3. Radarsensor nach Anspruch 1 oder 2, **dadurch gekennzeichnet, dass** der vorbestimmte Winkel der mindestens einen Hauptstrahlrichtung (5) des Radarsensors durch den Abstand (11) des der jeweiligen Linse zugehörigen mindestens einen Antennenelements (3) zur Lotsenkrechten der Leiterplatte (10), die durch das Linsenzentrum (9) verläuft, vorgegeben wird.

4. Radarsensor nach einem der vorhergehenden Ansprüche, **dadurch gekennzeichnet, dass** als dielektrische Linsen (6) zwei Linsen (6) vorgesehen sind, deren optische Achsen (8) in lateraler Richtung zu der einen oder den mehreren Antennennormalen (4) in entgegengesetzte Richtungen verkippt sind und die sich ergebenden Hauptstrahlrichtungen (5) des Radarsensors in lateraler Richtung zu der einen oder den mehreren Antennennormalen (4) in unterschiedliche Raumrichtungen ausgerichtet sind.

5. Radarsensor nach einem der vorhergehenden Ansprüche, **dadurch gekennzeichnet, dass** die mindestens eine oder mehreren Linsen (6) als eine oder mehrere Zylinderlinsen ausgeführt sind.

6. Radarsensor nach einem der vorhergehenden Ansprüche, **dadurch gekennzeichnet, dass** als Linsen (6) zwei Zylinderlinsen vorgesehen sind und so angeordnet sind, dass deren, axialen Längsachsen zueinander parallel ausgerichtet sind.

7. Radarsensor nach einem der vorhergehenden Ansprüche, **dadurch gekennzeichnet, dass** die mindestens zwei oder mehreren Antennenelemente (3) als seriell gespeiste Array-Antennen ausgeführt ist.

8. Radarsensor nach einem der vorhergehenden Ansprüche, **dadurch gekennzeichnet, dass** der Radarsensor zwischen dem der jeweiligen Linse zugehörigen mindestens einem Antennenelement (3) und der mindestens einen dielektrischer Linse (6) einen Reflektor (15) aufweist.

9. Radarsensor nach Anspruch 8, **dadurch gekennzeichnet, dass** der Reflektor (15) eine metallische Oberfläche aufweist.

10. Radarsensor nach einem der vorhergehenden Ansprüche, **dadurch gekennzeichnet, dass** die ein oder mehreren dielektrischen Linsen (6) als Fresnel-Linsen ausgeführt sind.

11. Radarsensor nach Anspruch 1, **dadurch gekennzeichnet, dass** mehrere der Empfangsantennen (22) entlang einer Linie, insbesondere einer in Azimutrichtung orientierten Linie, angeordnet sind.

## Claims

1. Radar sensor having a plurality of main beam directions (5), having a printed circuit board (2), on which two or more antenna elements (3) for transmitting or for transmitting and receiving the radar radiation are provided and one or more bistatic reception antennas (22) for receiving the radar radiation are arranged, and also at least one or more dielectric lenses (6), which are arranged in the beam path (7) of one or more of the antenna elements (3), wherein the optical axis (8) of the dielectric lens (6) is tilted with respect to the at least one or the plurality of antenna normals (4) at an angle (12) of greater than zero degrees so that at least one main beam direction (5) of the radar sensor is fixed at a predetermined angle to the perpendicular (10) of the printed circuit board surface,
**characterized in that**
one or more of the bistatic reception antennas (22) are arranged on the printed circuit board such that these reception antennas (22) do not have a dielectric lens in their beam path.

2. Radar sensor according to Claim 1, **characterized in that** the predetermined angle of the at least one main beam direction (5) of the radar sensor is specified by the tilt angle (12) of the optical axis (8) of the at least one dielectric lens (6) with respect to the at least one antenna normal (4).

3. Radar sensor according to Claim 1 or 2, **characterized in that** the predetermined angle of the at least one main beam direction (5) of the radar sensor is specified by the distance (11) of the at least one antenna element (3) associated with the respective lens from the perpendicular of the printed circuit board (10) extending through the lens centre (9).

4. Radar sensor according to one of the preceding claims, **characterized in that** two lenses (6) are provided as the dielectric lenses (6), whose optical axes (8) are tilted into opposite directions in the lateral direction with respect to the one or the plurality of antenna normals (4) and the resulting main beam directions (5) of the radar sensor are aligned into different spatial directions in the lateral direction with respect to the one or the plurality of antenna normals (4).

5. Radar sensor according to one of the preceding claims, **characterized in that** the at least one or more lenses (6) are designed as one or more cylindrical lenses.

6. Radar sensor according to one of the preceding claims, **characterized in that** two cylindrical lenses are provided as the lenses (6) and arranged such that their axial longitudinal axes are aligned parallel to one another.

7. Radar sensor according to one of the preceding claims, **characterized in that** the at least two or more antenna elements (3) are designed as serially fed array antennas.

8. Radar sensor according to one of the preceding claims, **characterized in that** the radar sensor has a reflector (15) between the at least one antenna element (3) associated with the respective lens and the at least one dielectric lens (6).

9. Radar sensor according to Claim 8, **characterized in that** the reflector (15) has a metallic surface.

10. Radar sensor according to one of the preceding claims, **characterized in that** the one or more dielectric lenses (6) are designed as Fresnel lenses.

11. Radar sensor according to Claim 1, **characterized in that** a plurality of the reception antennas (22) are arranged along a line, in particular a line that is oriented in the azimuthal direction.

## Revendications

1. Capteur radar doté de plusieurs directions de rayonnement principales (5), présentant une carte de circuits imprimés (2) sur laquelle deux ou plusieurs éléments d'antenne (3) sont prévus pour émettre ou pour émettre et recevoir le rayonnement radar, et une ou plusieurs antennes de réception bistatiques (22) pour recevoir le rayonnement radar sont disposées, et au moins une ou plusieurs lentilles diélectriques (6) qui sont disposées sur la trajectoire des rayons (7) d'un ou de plusieurs des éléments d'antenne (3),
l'axe optique (8) de la lentille diélectrique (6) étant basculé d'un angle (12) supérieur à zéro degré par rapport à ladite au moins une ou auxdites plusieurs normales d'antenne (4) de sorte qu'au moins une direction de rayonnement principale (5) du capteur radar est définie avec un angle prédéterminé par rapport à la verticale (10) de la surface de carte de circuits imprimés,
**caractérisé en ce qu'**une ou plusieurs des antennes de réception bistatiques (22) sont disposées sur la carte de circuits imprimés de telle sorte que ces antennes de réception (22) ne présentent aucune lentille diélectrique sur leur trajectoire des rayons.

2. Capteur radar selon la revendication 1, **caractérisé en ce que** l'angle prédéterminé de ladite au moins une direction de rayonnement principale (5) du capteur radar est spécifié par l'angle de basculement (12) de l'axe optique (8) de ladite au moins une lentille diélectrique (6) par rapport à ladite au moins une normale d'antenne (4) .

3. Capteur radar selon la revendication 1 ou 2, **caractérisé en ce que** l'angle prédéterminé de ladite au moins une direction de rayonnement principale (5) du capteur radar est spécifié par la distance (11) dudit au moins un élément d'antenne (3) associé à la lentille respective par rapport à la perpendiculaire de la carte de circuits imprimés (10) qui passe par le centre de lentille (9).

4. Capteur radar selon l'une quelconque des revendications précédentes, **caractérisé en ce que** comme lentilles diélectriques (6) deux lentilles (6) sont prévues dont les axes optiques (8) sont basculés dans la direction latérale par rapport à ladite une ou auxdites plusieurs normales d'antenne (4) dans des directions opposées, et les directions de rayonnement principales (5) du capteur radar qui en résultent sont alignées dans la direction latérale par rapport à ladite une ou auxdites plusieurs normales d'antenne (4) dans différentes directions spatiales.

5. Capteur radar selon l'une quelconque des revendications précédentes, **caractérisé en ce que** ladite au moins une ou lesdites plusieurs lentilles (6) sont réalisées sous la forme d'une ou de plusieurs lentilles cylindriques.

6. Capteur radar selon l'une quelconque des revendications précédentes, **caractérisé en ce que** comme lentilles (6) deux lentilles cylindriques sont prévues et disposées de telle sorte que leurs axes longitudinaux axiaux sont alignés en parallèle l'un à l'autre.

7. Capteur radar selon l'une quelconque des revendications précédentes, **caractérisé en ce que** les au moins deux ou plusieurs éléments d'antenne (3) sont réalisés sous la forme d'antennes réseau à alimentation série.

8. Capteur radar selon l'une quelconque des revendications précédentes, **caractérisé en ce que** le capteur radar présente un réflecteur (15) entre ledit au moins un élément d'antenne (3) associé à la lentille respective et ladite au moins une lentille diélectrique (6) .

9. Capteur radar selon la revendication 8, **caractérisé en ce que** le réflecteur (15) présente une surface métallique.

10. Capteur radar selon l'une quelconque des revendications précédentes, **caractérisé en ce que** ladite une ou lesdites plusieurs lentilles diélectriques (6) sont réalisées sous la forme de lentilles de Fresnel.

11. Capteur radar selon la revendication 1, **caractérisé en ce que** plusieurs des antennes de réception (22) sont disposées le long d'une ligne, en particulier d'une ligne orientée dans la direction azimutale.
